# EUROPEAN PATENT SPECIFICATION

(11) **EP 0 664 098 B1**
(45) Date of publication and mention of the grant of the patent: **27.08.1997**
(21) Application number: 95100631.1
(22) Date of filing: 18.01.1995
(51) Int. Cl.: A47J 31/06

(54) **Coffee machine**
Kaffeemaschine
Machine à café

(30) Priority: 20.01.1994 IT TO940008 U
(43) Date of publication of application: 26.07.1995
(73) Proprietor: ESSEGIELLE S.r.l, I-10156 Torino (IT)
(72) Inventor: Cortese, Virginio, I-10100 Torino (IT)
(74) Representative: Jorio, Paolo, Dr. Ing.

(56) References cited:
- DE-C- 440 854
- FR-A- 2 269 905

## Description

The present invention relates to a coffee machine, in particular an espresso coffee machine of the type disclosed in DE-C-440 854 and comprising a fixed body; a cup with a bowl for ground coffee; connecting means for releasably connecting the cup to the fixed body, the connecting means comprising first and second fastening means positively engaging each other and located on the fixed body and the cup respectively; and relative positioning means interposed between the fixed body and the cup for allowing setting said second fastening means in an initial insertion position wherein they initially engage said first fastening means.

On a normal espresso coffee machine, ground coffee is placed inside the bowl of a percolator cup which is fitted manually to the outlet of a hot-water supply device, normally consisting of a boiler, by means of a bayonet joint. The bayonet connection is made by first aligning each of a pair of tabs on the cup with the inlet of a respective groove formed in the hot-water supply device, moving the tabs along the respective grooves, and then rotating the cup about a vertical axis in relation to the hot-water supply device.

In general, aligning the tabs with the inlets of the grooves normally proves difficult, especially for inexperienced users, on account of the inlets not being visible from the outside, so that the tab insertion position must be located by trial and error. Moreover, in the course of locating the tab insertion position, small amounts of ground coffee at times spill from the bowl and, in addition to fouling the machine, emit an unpleasant odour by burning in contact with the hot-water supply device.

In the machine disclosed in DE-C-440 854, the aforementioned positioning means comprise a first locating element arranged in a fixed position on the fixed body, and a second locating element mounted on the cup and contacting the first location element when the cup is in the aforementioned initial insertion position.

In the above known machine, the initial insertion position is therefore perfectly defined; however, such initial insertion position is normally reached by means of a setting operation including rotating the cup in contact with the fixed body and generally involving spilling some ground coffee from the bowl.

It is an object of the present invention to provide a coffee machine designed to overcome the aforementioned drawbacks, and which, in particular, provides for troublefree connection of the percolator cup to the hot-water supply device.

According to the present invention, there is provided a coffee machine comprising a fixed body; a cup with a bowl for ground coffee; connecting means for releasably connecting the cup to the fixed body, the connecting means comprising first and second fastening means positively engaging each other and located on the fixed body and the cup respectively; and relative positioning means interposed between the fixed body and the cup for allowing setting said second fastening means in an initial insertion position wherein they initially engage said first fastening means, characterized in that said positioning means comprise a further body having an outer seat and rotating in relation to said fixed body about a vertical axis and to and from said insertion position; a locating element integral with said cup and releasably engaging said seat; angular stop means for securing said further body in relation to the fixed body; and elastic means for setting said seat about said axis in a reference position corresponding to said initial insertion position.

The invention will be described by way of example with reference to the accompanying drawings, in which:
Figure 1 shows a view in perspective of a preferred embodiment of the machine according to the present invention;
Figure 2 shows an exploded view of an assembly on the Figure 1 machine;
Figure 3 shows a view in perspective, with parts removed for clarity, of a detail in Figure 1 in various operating positions;
Figure 4 shows a larger-scale section of a detail in Figure 1.

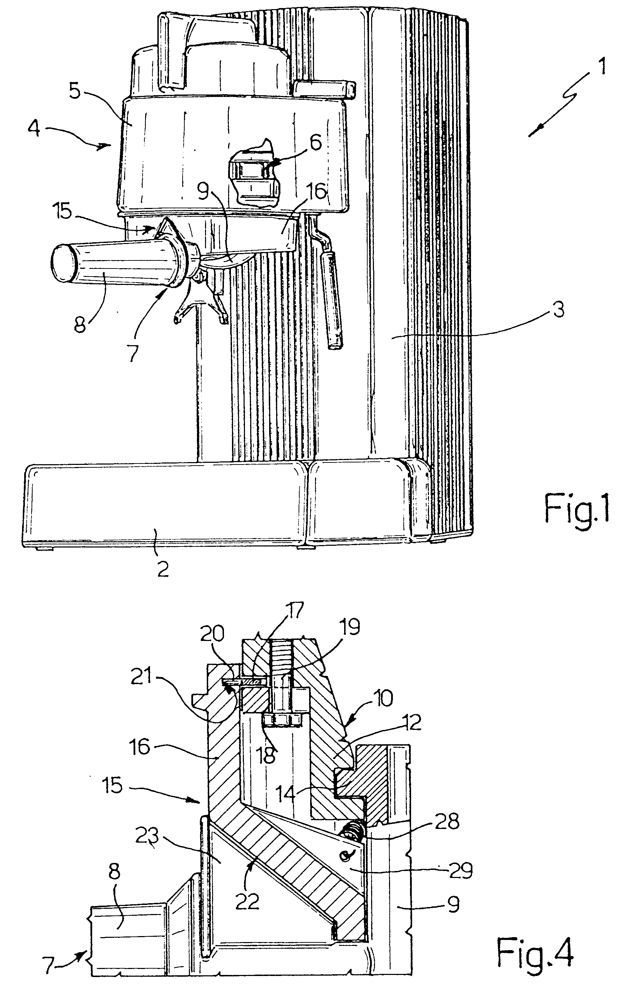

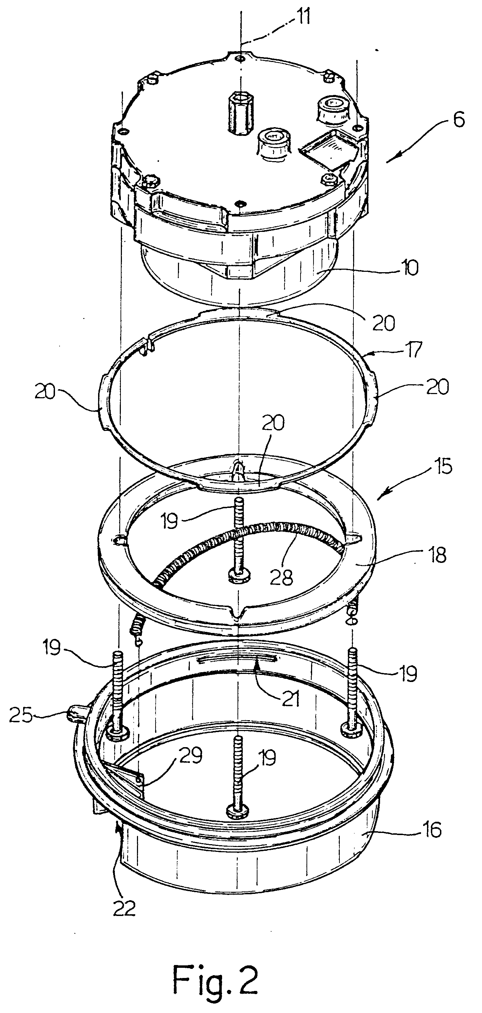

Number 1 in Figure 1 indicates a coffee machine comprising a base 2; an upright 3; and a liquid coffee dispenser 4. Dispenser 4 comprises an outer casing 5 fitted integral with upright 3; a known hot-water supply device 6 (Figures 1 and 2) housed inside casing 5; and a cup 7 in turn comprising a handle 8, and a casing 9 defining a bowl for ground coffee.

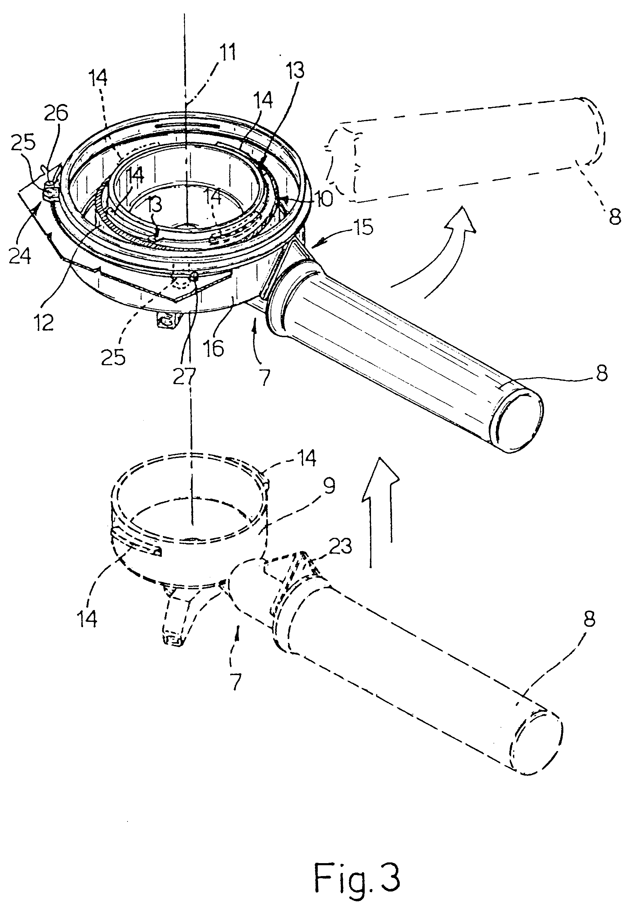

With reference to Figure 2, device 6 comprises a tubular end body 10 with a vertical axis 11; and cup 7 is connectable in known manner to body 10 by means of a bayonet joint. The bayonet joint is defined by an end portion 12 (Figure 3) of body 10 presenting a pair of inner grooves 13, and by a pair of tabs 14 extending outside casing 9 of cup 7 and each designed, in use, to travel along a respective groove 13.

As shown in Figures 3 and 4, machine 1 also comprises a relative positioning device 15 interposed between body 10 and cup 7, and which provides, when connecting cup 7 to device 6, for positioning each tab 14 inside the inlet of respective groove 13. More specifically, and with reference to Figures 2 and 4, device 15 comprises a tubular body 16 extending outside body 10, coaxially with axis 11, and connected to body 10 in axially-fixed and rotary manner about axis 11 by means of a retaining ring 17. Ring 17 is housed inside a seat defined, on one side, by a shoulder formed on body 10, and, on the other side, by an assembly ring 18 surrounding body 10 and fitted integral with device 6 by means of a number of screws 19, and presents a number of outer appendixes 20 positively engaging respective inner seats 21 on body 16. On the side facing base 2, body 16 presents an outer seat 22 extending perpendicular to axis 11 with its concavity facing base 2. Seat 22 is defined by two upwardly-converging flat surfaces, and is engaged by an outwardly-tapering projection 23 fitted integral with handle 8, located adjacent to casing 9, and extending on the same side as the opening of the bowl in casing 9.

Device 15 also comprises a stop assembly 24 (Figure 3) in turn comprising a tooth 25 integral with and outside body 16, and two locating pins 26 and 27 fixed in relation to body 10. Pin 26 provides for maintaining body 16 in such an angular reference position that, as seat 22 is engaged by projection 23, tabs 14 are guided towards the inlets of, and into engagement with, respective grooves 13.

Device 15 also comprises a return spring 28, one end of which is connected to one of screws 19, and the opposite end of which is connected to an inner appendix 29 of body 16 and provides for maintaining tooth 25 contacting pin 26.

Device 15 therefore provides for extremely fast, troublefree connection of cup 7 to device 6. As body 16 is always set to the reference position at the start of each connection of cup 7 to device 6, tabs 14 are automatically positioned correctly in relation to grooves 13 when projection 23 is engaged inside seat 22. Cup 7 is therefore connected by simply pushing it up towards device 6 so as to gradually engage projection 23 inside seat 22 and, at the same time, fit tabs 14 through respective grooves 13, and by then rotating cup 7 to complete the bayonet connection.

## Claims

1. A coffee machine (1) comprising a fixed body (10); a cup (7) with a bowl for ground coffee; connecting means (13, 14) for releasably connecting the cup (7) to the fixed body (10), the connecting means (13, 14) comprising first (13) and second (14) fastening means positively engaging each other and located on the fixed body (10) and the cup (7) respectively; and relative positioning means (15) interposed between the fixed body (10) and the cup (7) for allowing setting said second fastening means (14) in an initial insertion position wherein they initially engage said first fastening means (13), characterized in that said positioning means (15) comprise a further body (16) having an outer seat (22) and rotating in relation to said fixed body (10) about a vertical axis (11) and to and from said insertion position; a locating element (23) integral with said cup (7) and releasably engaging said seat (22); angular stop means (24) for securing said further body (16) in relation to the fixed body (10); and elastic means (28) for setting said seat (22) about said axis (11) in a reference position corresponding to said initial insertion position.

2. A machine as claimed in Claim 1, characterized in that said seat (22) extends radially in relation to said axis (11) and is downwardly-concave.

3. A machine as claimed in Claim 1 or 2, characterized in that said stop means (24) comprise first locating means (26) fixed in relation to said fixed body (10); and second locating means (25) integral with said further body (16) and designed to contact said first locating means (26).

4. A machine as claimed in Claim 3, characterized in that said second locating means (25) are arranged in relation to said seat (22) so as to contact said first locating means (26) when the seat (22) is in said reference position; said elastic means (28) being interposed between said fixed body (10) and said further body (16) for rotating said further body (16) in relation to said fixed body (10) about said axis (11), and for bringing said first (26) and second (25) locating means into contact with each other.

5. A machine as claimed in any one of the foregoing Claims, characterized in that said first fastening means (13) comprise a pair of parallel inner grooves (13); and said second fastening means are defined by a pair of tabs (14) engaging respective said grooves (13) in sliding manner, and defining a bayonet joint together with said first fastening means (13); said initial engagement position corresponding to a condition wherein each said tab (14) is located in the inlet of a respective said groove (13).

## Patentansprüche

1. Kaffeemaschine (1) umfassend einen fest angeordneten Körper (10); einen Napf (7) mit einem Becher für gemahlenen Kaffee; einer Verbindungseinrichtung (13, 14) zum lösbaren Verbinden des Napfes (7) mit dem fest angeordneten Körper (10), wobei die Verbindungsvorrichtung (13, 14) ein erstes (13) und ein zweites (14) Befestigungsmittel, die positiv aneinander angreifen und auf dem fest angeordneten Körper (10) und dem Napf (7) respektive angeordnet sind, und relative Positionierungsmittel (15) aufweist, die zwischen dem fest angeordneten Körper (10) und dem Napf (7) angeordnet sind, um eine Einstellung der zweiten Befestigungsmittel (14) in einer anfänglichen Einsetzposition zu gestatten, in der sie anfänglich an den ersten Befestigungsmitteln (13) angreifen, **dadurch gekennzeichnet, daß** die Positionierungseinrichtung (15) einen weiteren Körper (16) aufweisen, der einen äußeren Sitz (22) hat und sich bezüglich dem fest angeordneten Körper (10) um eine vertikale Achse (11) und in die und aus der Einsatzposition dreht; ein Lokalisierungselement (23), das einstückig mit dem Napf (7) aufgebildetr ist und lösbar an dem Sitz (22) angreift; ein Winkelanschlagmittel (24), um den weiteren Körper (16) in Bezug auf den fest angeordneten Körper (10) festzustellen, und eine elastische Einrichtung (28) zum Einstellen des Sitzes (22) um die Achse (11) in eine Referenzposition, die der anfänglichen Einsetzposition entspricht.

2. Eine Maschine nach Anspruch 1, **dadurch gekennzeichnet, daß** der Sitz (22) sich radial in Bezug auf die Achse (11) erstreckt und konkav nach unten gekrümmt ist.

3. Eine Maschine nach Anspruch 1 oder 2, **dadurch gekennzeichnet, daß** das Anschlagmittel (24) ein erstes Lokalisierungsmittel (26), das in Bezug auf den fest angeordneten Körper (10) fest angeordnet ist, und ein zweites Lokalisierungsmittel (25) umfaßt, das einstückig mit dem weiteren Körper (16) ausgebildet und so ausgeführt ist, das es mit dem ersten Lokalisierungsmittel (26) in Kontakt ist.

4. Eine Maschine nach Anspruch 3, **dadurch gekennzeichnet, daß** die zweiten Lokalisierungsmittel (25) in Bezug auf den Sitz (22) so angeordnet sind, das sie an dem ersten Lokalisierungsmittel (26) angreifen, wenn der Sitz (22) sich in der Referenzposition befindet, wobei die elastischen Mittel (28) zwischen dem fest angeordneten Körper (10) und dem weiteren Körper (16) angeordnet sind, um den weiteren Körper (16) in Bezug auf den fest angeordneten Körper (10) um die Achse (11) zu drehen und um die ersten (26) und zweiten (25) Lokalisierungsmittel in Kontakt miteinander zu bringen.

5. Eine Maschine nach einem der vorhergehenden Ansprüche, **dadurch gekennzeichnet, daß** die ersten Befestigungsmittel (13) ein Paar von parallelen, inneren Nuten (13) aufweisen, und daß die zweiten Befestigungsmittel von zwei Zapfen (14) definiert sind, die respektive in die Nuten (13) gleitend eingreifen und eine Bajonettverbindung mit den ersten Befestigungsmitteln (13) definieren, wobei die anfängliche Eingriffsposition einer Situation entspricht, bei der jeder der Zapfen (14) in dem Einlaß einer entsprechenden der Nuten (13) angeordnet ist.

## Revendications

1. Machine à café (1) comprenant un corps fixe (10) ; un godet (7) comportant une coupelle pour du café moulu ; des moyens de liaison (13, 14) pour relier de manière amovible le godet (7) au corps fixe (10), les moyens de liaison (13, 14) comprenant des premiers (13) et seconds (14) moyens de fixation positivement en prise les uns avec les autres et situés respectivement sur le corps fixe (10) et le godet (7) ; et des moyens de positionnement relatif (15) placés entre le corps fixe (10) et le godet (7) pour permettre la mise en place desdits seconds moyens de fixation (14) dans une position d'insertion initiale dans laquelle ils viennent initialement en prise avec lesdits premiers moyens de fixation (13), caractérisée en ce que lesdits moyens de positionnement (15) comprennent un autre corps (16) ayant un logement extérieur (22) et tournant par rapport audit corps fixe (10) autour d'un axe vertical (11), jusqu'à ladite position d'insertion et à partir de celle-ci ; un élément de positionnement (23) d'un seul tenant avec ledit godet (7) et venant en prise de manière amovible avec ledit logement (22) ; des moyens d'arrêt angulaire (24) pour fixer ledit autre corps (16) par rapport au corps fixe (10) ; et des moyens élastiques (28) pour mettre en place ledit logement (22) autour dudit axe (11) dans une position de référence correspondant à ladite position d'insertion initiale.

2. Machine selon la revendication 1, caractérisée en ce que ledit logement (22) s'étend radialement par rapport audit axe (11) et est concave vers le bas.

3. Machine selon la revendication 1 ou 2, caractérisée en ce que lesdits moyens d'arrêt (24) comprennent des premiers moyens de positionnement (26) fixes par rapport audit corps fixe (10) ; et des seconds moyens de positionnement (25) d'un seul tenant avec ledit autre corps (16) et conçus pour venir en contact avec lesdits premiers moyens de positionnement (26).

4. Machine selon la revendication 3, caractérisée en ce que lesdits seconds moyens de positionnement (25) sont disposés par rapport audit logement (22) de manière à venir en contact avec lesdits premiers moyens de positionnement (26) lorsque le logement (22) est dans ladite position de référence ; lesdits moyens élastiques (28) étant placés entre ledit corps fixe (10) et ledit autre corps (16) pour faire tourner ledit autre corps (16) par rapport audit corps fixe (10) autour dudit axe (11), et pour mettre lesdits premiers (26) et seconds (25) moyens de positionnement en contact les uns avec les autres.

5. Machine selon l'une quelconque des revendications précédentes, caractérisée en ce que lesdits premiers moyens de fixation (13) comprennent deux rainures internes parallèles (13) ; et lesdits seconds moyens de fixation sont définis par deux pattes (14) en prise de façon coulissante avec lesdites rainures respectives (13) et définissant un assemblage à baïonnette avec lesdits premiers moyens de fixation (13) ; ladite position de mise en prise initiale correspondant à une condition dans laquelle chacune desdites pattes (14) est située dans l'entrée de la rainure correspondante (13).
